# FASCICULE DE BREVET EUROPEEN

(11) **EP 3 094 503 B1**
(45) Date de publication et mention de la délivrance du brevet: **06.11.2019**
(21) Numéro de dépôt: 14809639.9
(22) Date de dépôt: 09.12.2014
(51) Int. Cl.: B60C 11/04, B60C 11/03, B60C 11/13

(54) **BANDE DE ROULEMENT ÉVOLUTIVE POUR PNEU**
VERBESSERTE LAUFFLÄCHE FÜR EINEN REIFEN
EVOLVING TREAD FOR A TYRE

(30) Priorité: 13.12.2013 FR 1362635
(43) Date de publication de la demande: 23.11.2016
(73) Titulaire: Compagnie Générale des Etablissements Michelin, 63000 Clermont-Ferrand (FR)
(72) Inventeur: CAMBON, Stéphanie, F-63040 Clermont-Ferrand Cedex 9 (FR); LEJEUNE, Jonathan, F-63040 Clermont-Ferrand Cedex 9 (FR); BARDIN, Damien, F-63040 Clermont-Ferrand Cedex 9 (FR)
(74) Mandataire: Diernaz, Christian
(86) Numéro de dépôt international: PCT/EP2014/077088
(87) Numéro de publication internationale: WO 2015/086622

(56) Documents cités:
- EP-A2- 0 989 000
- WO-A1-2011/073313
- FR-A1- 2 940 185

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau présente sur la chaussée par temps de pluie sont rendues pérennes, ces bandes de roulement présentant des performances améliorées en roulage.

### ÉTAT DE LA TECHNIQUE

De façon connue, des conditions de roulage par temps de pluie requièrent une élimination la plus rapide possible de l'eau entre la bande de roulement de chaque pneu et la chaussée afin d'assurer le contact de la bande de roulement avec la chaussée. L'eau qui n'est pas repoussée sur l'avant du pneu s'écoule en partie dans les rainures et les incisions formées dans la bande de roulement du pneu que ces rainures et incisions soient orientées dans la direction circonférentielle ou la direction transversale ou encore dans une direction oblique.

Par découpure, on entend toute cavité réalisée par moulage dans une bande de roulement, cette découpure s'étendant dans une direction principale et dans la profondeur de la bande de roulement.

Par rainure, on entend ici un creux s'ouvrant sur une surface de roulement destinée à être en contact avec la chaussée, ce creux ayant une largeur moyenne appropriée pour que les parois de matière qui le délimitent ne soient jamais en contact l'une avec l'autre dans les conditions normales d'usage du pneu.

Par incision, on entend ici une fente mince ayant une largeur moyenne faible et telle que, sous les conditions normales d'usage du pneu, les parois de matière la délimitant puissent venir, au moins partiellement, en contact l'une sur l'autre lors du passage dans la région de contact avec la chaussée.

Par épaisseur de matière à user (notée PMU), on entend l'épaisseur de bande de roulement pouvant être usée en roulage avant d'atteindre la limite légale d'usage d'une bande de roulement sur un pneu repérée notamment par des indicateurs d'usure formés dans les rainures.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande. Par ailleurs on utilise le terme circonférentiel pour indiquer une direction qui, correspond à une direction tangente à tout cercle centré sur l'axe de rotation du pneu. Cette même direction correspond à la direction longitudinale de la bande de roulement celle-ci étant formée à la manière d'une bande plane avant incorporation à la fabrication d'un pneu.

Quelle que soit la catégorie de pneu (c'est-à-dire que ce soit un pneu équipant un véhicule de tourisme ou un véhicule destiné à porter de lourdes charges), la bande de roulement doit présenter une performance en drainage de l'eau présente sur la route qui est toujours au-dessus d'une performance minimale dite performance de sécurité. En conséquence et compte tenu de l'usure progressive de la bande de roulement qui réduit progressivement les sections transversales des rainures donc la capacité de ces rainures à évacuer un volume de liquide, il est usuel de réaliser des rainures débouchant sur la surface de roulement à l'état neuf et se prolongeant dans l'épaisseur de la bande jusqu'à au moins un niveau qui correspond à une limite légale nécessitant le retrait de la bande.

La réalisation d'une pluralité de rainures sur une bande de roulement a pour inconvénient de réduire la quantité de matière de bande pour une largeur donnée de bande et par voie de conséquence d'affecter sensiblement les rigidités de la bande de roulement. Il en résulte que pour faire face aux sollicitations subies en roulage, la personne du métier doit compenser ces diminutions de rigidité par tout moyen à sa disposition notamment en adaptant la structure interne du pneu ce qui n'est pas sans incidence sur le prix de revient du pneu lui-même. Ces diminutions de rigidité peuvent en outre affecter la vitesse d'usure, la régularité de cette usure et certaines des performances attendues en roulage.

Par ailleurs on constate une augmentation de la résistance au roulement, ce qui se traduit par une augmentation sensible de la consommation des véhicules équipés de tels pneus, résultant d'une augmentation des pertes hystérétiques liées aux cycles de déformations de la matière caoutchoutique dont est formée la bande de roulement.

Il a été proposé dans le document WO 2011-039194 A1 de former dans une bande de roulement des rainures ayant la particularité de s'ouvrir de manière discontinue sur la surface de roulement de la bande à l'état neuf. Cette rainure peut être considérée comme étant une rainure ondulante dans l'épaisseur de la bande en s'ouvrant régulièrement sur la surface de roulement. Ce type de rainure ondulante peut être formé que ce soit dans la direction circonférentielle ou dans toute autre direction. Comme décrit dans cette publication, ce type de rainure est à l'état initial (correspondant à l'état neuf de la bande) continu ce qui permet d'assurer, en roulage sur chaussée revêtue d'eau, une capture de l'eau dans les parties de rainure s'ouvrant sur la surface de roulement lors du passage dans le contact avec la chaussée, l'eau ainsi captée étant drainée dans la rainure ondulante sous la surface de roulement. Le liquide ainsi capté est ensuite éjecté en dehors de la région de contact sous l'effet des forces centrifuges. Ce même document décrit la possibilité, à l'image des dessins de sculpture antérieurs, de réaliser des connexions entre au moins deux rainures ondulantes de ce type.

Les documents FR 2940185 A1, EP 2989000 A2 sont également cités comme faisant partie de l'état de la technique à prendre en considération.

### BREF EXPOSE DE L'INVENTION

La présente invention s'attache à proposer une nouvelle géométrie de rainure assurant à la fois un excellent drainage de l'eau captée lors du passage dans le contact afin de réaliser un contact nécessaire avec la chaussée tout en limitant la diminution des rigidités de la bande de roulement afin notamment de réduire les pertes hystérétiques liées aux déformations des éléments de sculpture de la bande de roulement lors du passage dans le contact.

L'objet de l'invention est de proposer une bande de roulement pourvue de découpures permettant d'obtenir une performance égale ou supérieure à la performance minimale de sécurité en drainage et cela quel que soit le niveau d'usure de cette bande tout en obtenant des performances en résistance au roulement répondant aux exigences actuelles du marché du pneu pour véhicules poids lourd.

À cet effet, l'invention a pour objet une bande de roulement pour pneu de véhicule poids lourd d'épaisseur totale PMU correspondant à l'épaisseur de matière à user en roulage et de largeur W, cette bande de roulement ayant à l'état neuf une surface de roulement destinée à venir en contact avec une chaussée lors du roulage d'un pneu pourvu de cette bande.

Cette bande comprend au moins une découpure s'ouvrant à l'état initial (bande de roulement neuve) sur la surface de roulement, cette découpure étant caractérisée en ce qu'elle comprend :
- une partie externe ayant la forme d'une rainure selon une direction principale, cette rainure s'ouvrant sur la surface de roulement à l'état neuf, cette rainure ayant, sur la surface de roulement à l'état neuf, une largeur Le appropriée pour ne pas se fermer dans le contact et une profondeur moyenne Pe inférieure à 70% de l'épaisseur de matière à user PMU, plus préférentiellement inférieure à 50% de cette épaisseur PMU ;
- une partie interne formant le fond de la découpure, cette partie interne ayant la forme d'un canal de largeur moyenne Lc et de hauteur moyenne Hc, ce canal étant destiné à former une nouvelle rainure continue après une usure partielle de la bande de roulement au plus égale à 80% de l'épaisseur PMU ;
- une partie intermédiaire faisant la liaison entre la partie interne et la partie externe, cette partie intermédiaire comprenant en alternance - dans la direction principale de la rainure formant la partie externe, une succession de parties larges et de parties étroites, les parties larges étant appropriées pour ne pas se fermer lors du passage dans le contact et les parties étroites étant appropriées pour se fermer avec contact lors du passage dans le contact avec une chaussée et ainsi limiter la diminution de rigidité de la bande de roulement liée à la présence de cette découpure.

Préférentiellement le canal de la partie interne peut apparaître après une usure partielle au moins égale à 50% de l'épaisseur PMU;

Préférentiellement la largeur moyenne Lc du canal est au moins égale à 20% de la largeur de surface de la rainure de la partie externe, plus préférentiellement au moins égale à 75% de la largeur de surface de la rainure de la partie externe. Préférentiellement, la hauteur moyenne Hc de ce canal est au plus de 50% de l'épaisseur PMU, plus préférentiellement encore au plus de 20% de l'épaisseur PMU.

Préférentiellement la partie intermédiaire a une hauteur Hi qui est au moins égale à 10% de l'épaisseur PMU et encore plus préférentiellement au moins égale à 25%.

Grâce à cette structure de bande de roulement, on obtient un volume de creux approprié pour réaliser un drainage satisfaisant à l'état neuf et aussi quel que soit le niveau de l'usure tout en limitant la diminution de rigidité de la bande de roulement à l'état neuf.

Pour augmenter la rigidité de la bande de roulement selon l'invention, il est avantageux que les parties étroites de la partie intermédiaire soient pourvues de moyens de blocage mécanique des déplacements relatifs des parois en vis-à-vis délimitant lesdites parties étroites. De tels moyens peuvent prendre la forme d'ondulation des parois en vis-à-vis ou encore de reliefs moulés sur lesdites parois et appropriés pour coopérer ensemble. Ces mêmes parois peuvent avoir une rugosité de surface appropriée pour s'opposer au glissement d'une paroi contre l'autre.

Dans une variante de l'invention, les parties larges de la partie intermédiaire forment des canaux obliques reliant la partie externe de rainure à la partie interne de canal, ces parties larges n'étant pas connectées entre elles, c'est-à-dire qu'elles sont disjointes les unes des autres.

Dans une autre variante ces parties larges forment des canaux obliques et sont orientés selon une même direction faisant un angle moyen plus grand que zéro degré avec la direction perpendiculaire à la surface de roulement à l'état neuf. Bien entendu, il est possible d'adapter l'angle des parties obliques et même de prévoir des angles différents pour chacun des canaux.

L'invention concerne également un pneu pourvu d'une bande de roulement définie selon l'invention, cette bande de roulement surmontant radialement à l'extérieur une enveloppe de pneu constituée d'une armature de carcasse et d'une armature de sommet. La bande de roulement de ce pneu est réalisée comme l'une des variantes décrites précédemment, certaines dimensions étant liées à la longueur moyenne de la surface de contact de la bande avec la chaussée dans les conditions nominales d'usage du pneu, ces conditions nominales d'usage étant définies notamment dans les règlements de l'E.T.R.T.O. ou de la J.A.T.M.A. ou encore de la T.R.A.. Cela peut notamment être le cas pour les longueurs des parties étroites et des parties larges de la partie intermédiaire : en effet, il est judicieux qu'il y ait toujours une partie large dans le contact pour assurer un drainage satisfaisant de l'eau présente sur la chaussée.

D'autres caractéristiques et avantages de l'invention ressortent de la description faite ci-après en référence aux dessins annexés qui montrent une forme de réalisation de l'objet de l'invention.

### BREVE DESCRIPTION DES FIGURES

La figure 1 montre une vue partielle d'une bande de roulement comprenant une découpure selon l'invention ;
Les figures 2A, 2B montrent des coupes selon deux plans perpendiculaires au plan de la figure 1 et dont les traces respectives sont représentées par les lignes IIA-IIA et IIB-IIB ;
La figure 3 montre une vue en coupe selon la direction principale d'une variante d'une découpure selon l'invention ;
Les figures 3A, 3B montrent des coupes selon deux plans perpendiculaires au plan de la figure 3 et dont les traces respectives sont représentées par les lignes IIIA-IIIA et IIIB-IIIB ;
La figure 4 montre une vue en coupe selon la direction principale d'une autre variante d'une découpure selon l'invention ;
La figure 5 montre une vue en coupe selon la direction principale d'une autre variante d'une découpure selon l'invention.

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

### DESCRIPTION DES FIGURES

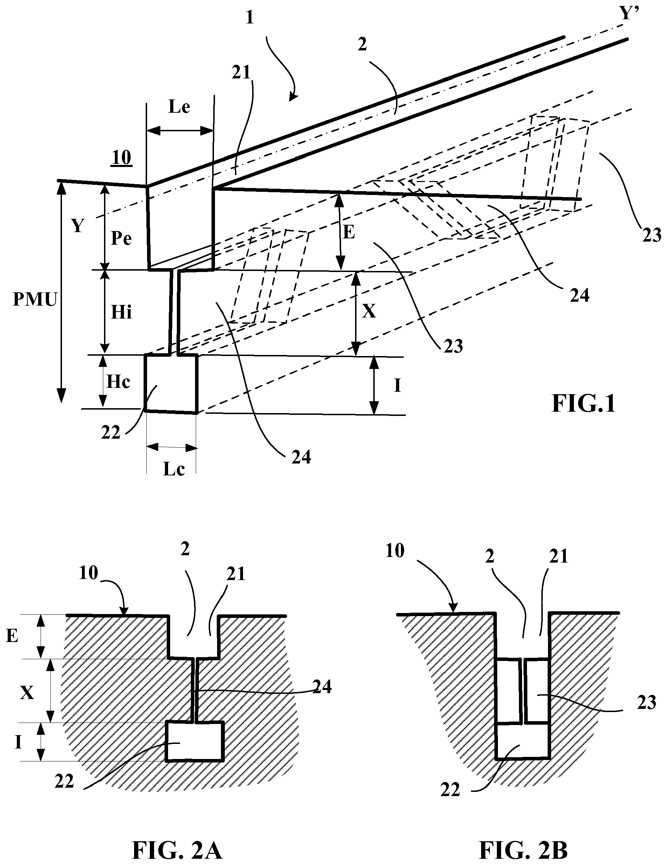

La figure 1 montre une vue partielle d'une bande de roulement 1 comprenant une découpure 2 selon l'invention, cette découpure 2 s'étendant dans une direction principale indiquée sur la figure par la direction YY'. Cette bande de roulement 1 est destinée à équiper un pneu de dimension 315/70R22.5.

Cette découpure 2 est formée dans une bande de roulement 1 ayant une surface de roulement 10 à l'état neuf destinée à venir en contact avec la chaussée lors du roulage d'un pneu pourvu de ladite bande. Cette découpure 2 s'ouvre à l'état initial (c'est-à-dire lorsque la bande de roulement est neuve et n'a pas encore été usée) sur la surface de roulement 10. La bande de roulement a une épaisseur de matière à user en roulage PMU égale dans le cas présent à 14.5 mm, épaisseur au-delà de laquelle il est nécessaire de renouveler la bande de roulement soit par rechapage soit par remplacement du pneu.

Cette découpure 2 comprend plusieurs parties dans sa profondeur, à savoir :
- une partie externe **E** ayant la forme d'une rainure 21 s'ouvrant sur la surface de roulement 10 à l'état neuf, cette rainure ayant une profondeur moyenne Pe qui est ici égale à 7.4 mm (7.4/14.5 = 51%) et une largeur Le sur la surface de roulement à l'état neuf égale à 4.3 mm ;
- une partie interne **I** formant la partie de la découpure 2 la plus à l'intérieur de la bande de roulement 1, cette partie interne **I** ayant la forme d'un canal continu **22** ayant une largeur moyenne Lc égale à 3.5 mm et une hauteur moyenne Hc égale à 3.5 mm ; ce canal a une section de forme sensiblement circulaire de diamètre égal à 3.5 mm. Ce canal 22, continu dans la direction principale de la découpure, est destiné à former une nouvelle rainure après une usure partielle de la bande de roulement ;
- une partie intermédiaire **X** mettant en relation la partie interne **I** et la partie externe **E** de la découpure 2, cette partie intermédiaire **X** comprenant en alternance dans la direction principale de la découpure, une succession de parties larges 23 et de parties étroites 24, les parties larges 23 étant dimensionnellement appropriées pour ne pas se fermer lors du passage dans le contact avec la chaussée pendant le roulage et les parties étroites 24 étant appropriées pour se fermer lors du passage dans le contact et ainsi limiter la diminution de rigidité de la bande de roulement 1 liée à la présence de cette découpure 2. Cette partie intermédiaire a une hauteur Hi égale à 4.6 mm.

Dans l'exemple présenté, les parties étroites sont des incisions de largeur moyenne 0.6 mm et les parties larges ont une largeur moyenne égale à 3.5 mm de manière à s'inscrire dans la continuité à la fois de la rainure externe et du canal interne.

Le volume de creux de la découpure 2 telle que montrée et décrite est bien inférieur au volume de creux d'une rainure de dimensions semblables et combinant les parties externe et interne tout en assurant la continuité complète entre ces deux parties. Avec cette découpure selon l'invention, le drainage de l'eau présente sur la chaussée par temps de pluie est réalisé à l'état neuf à la fois dans la rainure 21 de la partie externe E et dans le canal 22 qui est en communication avec cette rainure 21 par les parties larges 23 de la partie intermédiaire de la découpure 2.

Lorsque l'usure de la bande de roulement a complètement effacé la rainure 21 de la partie externe E, les parties larges 23 s'ouvrent sur la nouvelle surface de roulement et leur liaison avec le canal 22 assure encore un drainage suffisant. Il est bien entendu du ressort de la personne du métier de prévoir un volume de drainage suffisant dès lors que l'usure de la bande atteint le canal 22, lequel forme sur la nouvelle surface de roulement une rainure totalement ouverte sur cette surface de roulement.

Grâce à cette structure de bande de roulement, on obtient un volume de creux approprié pour réaliser un drainage satisfaisant à l'état neuf et quel que soit le niveau de l'usure tout en maîtrisant la diminution de rigidité de la bande de roulement à l'état neuf.

Les figures 2A, 2B montrent des coupes selon deux plans perpendiculaires au plan de la figure 1 et dont les traces respectives sont représentées par les lignes IIA-IIA et IIB-IIB.

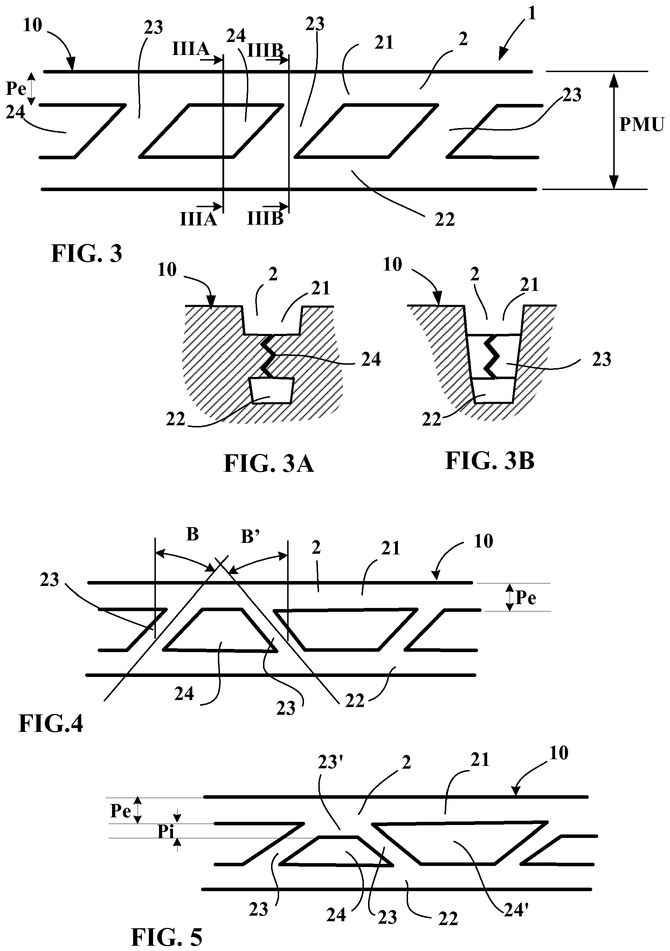

La figure 3 montre une vue en coupe selon la direction principale d'une variante d'une découpure selon l'invention. Sur cette figure 3 on aperçoit une rainure 21 s'ouvrant sur la surface de roulement 10 à l'état neuf d'une bande de roulement 1. Cette rainure 21 est en relation dans la profondeur de la bande avec un canal 22 continu dans la direction principale de la découpure par une partie intermédiaire X, cette dernière étant formée par une pluralité de parties larges 23 et de parties étroites 24. Les parties larges 23 de la partie intermédiaire X ont la forme de canaux orientés obliquement tous dans une même direction A prise par rapport à une direction perpendiculaire à la surface de roulement. Dans le cas présent cette orientation est de l'ordre de 45 degrés. Ces canaux 23 ont des dimensions appropriées pour mettre en communication la rainure 21 de la partie externe et le canal 22 de la partie interne. Par mettre en communication, on entend ici que la section de chaque canal 23 de la partie intermédiaire est approprié pour permettre une circulation de liquide en provenance de la rainure vers le canal.

Les figures 3A, 3B montrent des coupes selon deux plans perpendiculaires au plan de la figure 3 et dont les traces respectives sont représentées par les lignes IIIA-IIIA et IIIB-IIIB.

On voit sur ces deux coupes que les parties étroites 24 de la partie intermédiaire de la découpure représentée ont la forme d'incision de tracé zigzag dans la profondeur pour assurer un blocage mécanique, ce qui est favorable pour réduire la diminution de rigidité de la bande de roulement liée à la présence de découpure.

La figure 4 montre une vue en coupe selon la direction principale d'une autre variante d'une découpure selon l'invention. Cette variante se distingue de la variante montrée avec la figure 3 en ce que les parties larges 23 forment des canaux obliques ayant en alternance des orientations différentes B et B' avec une direction perpendiculaire à la surface de roulement 10; dans le cas présent, ces angles valent + 45 degrés et - 45 degrés. Ces canaux obliques 23 relient la rainure externe 21 au canal 22. Par ailleurs des incisions 24 sont formées pour être reliées à la rainure externe et au canal ainsi qu'aux canaux obliques.

Dans cette variante les canaux obliques s'étendent tous à partir d'une même profondeur Pe mesurée par rapport à la surface de roulement 10.

La figure 5 montre une vue en coupe selon la direction principale d'une autre variante d'une découpure 2 selon l'invention. Selon cette variante, les parties étroites 24, 24' de la partie intermédiaire de la découpure 2 ont en alternance (c'est-à-dire une sur deux) une hauteur réduite. Tout se passe comme si les parties obliques 23 étaient reliées entre elles par des parties 23', ces dernières ayant une profondeur Pi mesurée à partir d'une profondeur Pe. On forme ainsi une sorte de rainure ondulante à partir de la profondeur Pe.

Quelle que soit la variante considérée de l'invention, la présence des incisions formant les parties étroites facilite le moulage et le démoulage.

L'invention n'est pas limitée aux exemples décrits et diverses modifications peuvent y être apportées sans sortir de son cadre tel que défini par les revendications. Notamment une découpure telle que décrite peut être orientée dans une orientation quelconque prise sur une bande de roulement que ce soit dans la direction circonférentielle correspondant à la direction de roulage ou la direction transversale voire une direction oblique. Par ailleurs, il est à noter que les parties formant des canaux obliques peuvent être limitées par des surfaces planes comme cela a été montré avec les variantes représentées ou avec des surfaces courbes.

## Revendications

1. Bande de roulement (1) pour pneu de véhicule poids lourd d'épaisseur totale PMU correspondant à l'épaisseur de matière à user en roulage, cette bande de roulement ayant à l'état neuf une surface de roulement (10) destinée à venir en contact avec une chaussée lors du roulage d'un pneu pourvu de cette bande, cette bande comprenant au moins une découpure (2) s'ouvrant à l'état initial sur la surface de roulement (10), cette découpure (2) étant telle qu'elle comprend :
- une partie externe (**E**) ayant la forme d'une rainure (21) selon une direction principale, cette rainure (21) s'ouvrant sur la surface de roulement à l'état neuf et ayant sur cette surface de roulement une largeur Le appropriée pour ne pas se fermer dans le contact et une profondeur moyenne Pe inférieure à 70% de l'épaisseur PMU ;
- une partie interne (**I**) formant le fond de la découpure, cette partie interne ayant la forme d'un canal (22) de largeur moyenne Lc et de hauteur moyenne Hc, ce canal étant destiné à former une nouvelle rainure continue après une usure partielle de la bande de roulement au plus égale à 80% de l'épaisseur PMU ;
- une partie intermédiaire (**X**) faisant la liaison entre la partie interne (**I**) et la partie externe (**E**), cette partie intermédiaire (**X**) comprenant en alternance - dans la direction principale de la rainure formant la partie externe, une succession de parties larges (23) et de parties étroites (24), les parties larges (23) étant appropriées pour ne pas se fermer lors du passage dans le contact et les parties étroites (24) étant appropriées pour se fermer lors du passage dans le contact et ainsi limiter la diminution de rigidité de la bande de roulement liée à la présence de cette découpure (2),
cette bande de roulement étant **caractérisée en ce que** les parties larges (23) de la partie intermédiaire (X) forment des canaux obliques reliant la partie externe de rainure à la partie interne de canal, ces parties larges (23) étant disjointes les unes des autres.

2. Bande de roulement (1) selon la revendication 1 **caractérisée en ce que** le canal de la partie interne peut apparaître après une usure partielle au moins égale à 50% de l'épaisseur PMU.

3. Bande de roulement (1) selon la revendication 1 **caractérisée en ce que** la largeur moyenne Lc du canal est au moins égale à 20% de la largeur Le de surface de la rainure de la partie externe, et encore plus préférentiellement au moins égale à 75% de la largeur de surface de la rainure de la partie externe.

4. Bande de roulement (1) selon la revendication 1 **caractérisée en ce que** la hauteur moyenne Hc du canal (22) de la partie interne (I) est au plus égale à 50% de l'épaisseur PMU.

5. Bande de roulement (1) selon la revendication 1 **caractérisée en ce que** la hauteur moyenne Hc du canal (22) de la partie interne (I) est au plus égale à 20% de l'épaisseur PMU.

6. Bande de roulement (1) selon la revendication 1 **caractérisée en ce que** la partie intermédiaire (X) a une hauteur Hi qui est au moins égale à 10% de l'épaisseur PMU et encore plus préférentiellement au moins égale à 25%.

7. Bande de roulement (1) selon l'une quelconque des revendications 1 à 6 **caractérisée en ce que** les parties étroites (24) de la partie intermédiaire (X) sont pourvues de moyens de blocage mécanique des déplacements relatifs des parois en vis-à-vis délimitant lesdites parties étroites.

8. Pneu pourvu d'une bande de roulement selon l'une quelconque des revendications 1 à 7, ce pneu étant **caractérisé en ce qu'**il est destiné à équiper un véhicule poids lourd.

## Patentansprüche

1. Laufstreifen (1) für einen Reifen eines Schwerlastfahrzeugs mit einer Gesamtdicke PMU, die der Dicke des beim Fahren abzunutzenden Materials entspricht, wobei dieser Laufstreifen im neuen Zustand eine Lauffläche (10) aufweist, die dazu bestimmt ist, bei Einsatz eines mit diesem Laufstreifen versehenen Reifens mit einer Fahrbahn in Kontakt zu kommen, wobei dieser Laufstreifen wenigstens einen Ausschnitt (2) umfasst, der sich im Anfangszustand auf die Lauffläche (10) öffnet, wobei dieser Ausschnitt (2) so beschaffen ist, dass er umfasst:
- einen äußeren Teil (**E**), der die Form einer Rille (21) entlang einer Hauptrichtung aufweist, wobei diese Rille (21) im neuen Zustand zur Lauffläche hin offen ist und auf dieser Lauffläche eine Breite Le, die so angepasst ist, dass sie sich beim Kontakt nicht schließt, und eine mittlere Tiefe Pe, die kleiner als 70 % der Dicke PMU ist, aufweist;
- einen inneren Teil (**I**), der den Boden des Ausschnitts bildet, wobei dieser innere Teil die Form eines Kanals (22) mit einer mittleren Breite Lc und einer mittleren Höhe Hc aufweist, wobei dieser Kanal dazu bestimmt ist, nach einer teilweisen Abnutzung des Laufstreifens, die höchstens 80 % der Dicke PMU beträgt, eine neue durchgehende Rille zu bilden;
- einen Zwischenteil (**X**), der die Verbindung zwischen dem inneren Teil (**I**) und dem äußeren Teil (**E**) herstellt, wobei dieser Zwischenteil (**X**) in der Hauptrichtung der Rille, die den äußeren Teil bildet, eine wechselnde Folge von breiten Teilen (23) und schmalen Teilen (24) umfasst, wobei die breiten Teile (23) so angepasst sind, dass sie sich beim Übergang in den Kontakt nicht schließen, und die schmalen Teile (24) so angepasst sind, dass sie sich beim Übergang in den Kontakt schließen und so die Verringerung der Steifigkeit des Laufstreifens, die mit dem Vorhandensein dieses Ausschnitts (2) verbunden ist, begrenzen,
wobei dieser Laufstreifen **dadurch gekennzeichnet ist, dass** die breiten Teile (23) des Zwischenteils (X) schräge Kanäle bilden, die den äußeren Teil der Rille mit dem inneren Teil des Kanals verbinden, wobei diese breiten Teile (23) voneinander getrennt sind.

2. Laufstreifen (1) nach Anspruch 1, **dadurch gekennzeichnet, dass** der Kanal des inneren Teils nach einer teilweisen Abnutzung erscheinen kann, die mindestens 50 % der Dicke PMU beträgt.

3. Laufstreifen (1) nach Anspruch 1, **dadurch gekennzeichnet, dass** die mittlere Breite Lc des Kanals mindestens 20 % der Breite Le der Oberfläche der Rille des äußeren Teils beträgt, und noch stärker bevorzugt mindestens 75 % der Breite der Oberfläche der Rille des äußeren Teils.

4. Laufstreifen (1) nach Anspruch 1, **dadurch gekennzeichnet, dass** die mittlere Höhe Hc des Kanals (22) des inneren Teils (I) höchstens 50 % der Dicke PMU beträgt.

5. Laufstreifen (1) nach Anspruch 1, **dadurch gekennzeichnet, dass** die mittlere Höhe Hc des Kanals (22) des inneren Teils (I) höchstens 20 % der Dicke PMU beträgt.

6. Laufstreifen (1) nach Anspruch 1, **dadurch gekennzeichnet, dass** der Zwischenteil (X) eine Höhe Hi aufweist, welche mindestens 10 % der Dicke PMU und noch stärker bevorzugt mindestens 25 % beträgt.

7. Laufstreifen (1) nach einem der Ansprüche 1 bis 6, **dadurch gekennzeichnet, dass** die schmalen Teile (24) des Zwischenteils (X) mit Mitteln zur mechanischen Blockierung der relativen Verschiebungen der einander gegenüberliegenden Wände, welche die schmalen Teile begrenzen, versehen sind.

8. Reifen, welcher mit einem Laufstreifen nach einem der Ansprüche 1 bis 7 versehen ist, wobei dieser Reifen **dadurch gekennzeichnet ist, dass** er zur Ausrüstung eines Schwerlastfahrzeugs bestimmt ist.

## Claims

1. Tread (1) for a heavy vehicle tyre of total wearing thickness PMU corresponding to the thickness of material that can be worn away during running, this tread when new having a tread surface (10) intended to come into contact with a roadway when a tyre provided with this tread is being driven on, this tread comprising at least one cut (2) opening in the initial condition onto the tread surface (10), this cut (2) being such that it comprises:
- an external part (**E**) having the form of a groove (21) in the main direction, this groove (21) opening onto the tread surface when new and having, on this tread surface, a width Le such that it does not close up in the contact patch and a mean depth Pe less than 70% of the thickness PMU;
- an internal part (**I**) forming the bottom of the cut, this internal part having the shape of a channel (22) of mean width Lc and mean height Hc, this channel being intended to form a new continuous groove when the part wear of the tread reaches at most 80% of the thickness PMU;
- an intermediate part (**X**) making the connection between the internal part (**I**) and the external part (**E**), this intermediate part (**X**) comprising an alternation - in the main direction of the groove that forms the external part, a succession of wide parts (23) and of narrow parts (24), the wide parts (23) being such that they do not close when they enter the contact patch and the narrow parts (24) being such that they do close when they enter the contact patch, thus limiting the reduction in stiffness of the tread caused by the presence of this cut (2),
this tread being **characterized in that** the wide parts (23) of the intermediate part (X) form oblique channels connecting the external groove part to the internal channel part, these wide parts (23) being disjointed from one another.

2. Tread (1) according to Claim 1, **characterized in that** the channel of the internal part may be revealed once the part wear reaches at least 50% of the thickness PMU.

3. Tread (1) according to Claim 1, **characterized in that** the mean width Lc of the channel is at least equal to 20% of the width Le of the surface area of the groove of the external part, and more preferentially still, at least equal to 75% of the surface width Le of the groove of the external part and, more preferably still, at least equal to 75% of the surface width of the groove of the external part.

4. Tread (1) according to Claim 1, **characterized in that** the mean height Hc of the channel (22) of the internal part (I) is at most equal to 50% of the thickness PMU.

5. Tread (1) according to Claim 1, **characterized in that** the mean height Hc of the channel (22) of the internal part (I) is at most equal to 20% of the thickness PMU.

6. Tread (1) according to Claim 1, **characterized in that** the intermediate part (X) has a height Hi which is at least equal to 10% of the thickness PMU and more preferably still at least equal to 25%.

7. Tread (1) according to any one of Claims 1 to 6, **characterized in that** the narrow parts (24) of the intermediate part (X) are provided with means of mechanically blocking the relative movements of the opposing walls that delimit the said narrow parts.

8. Tyre provided with a tread according to any one of Claims 1 to 7, this tyre being **characterized in that** it is intended to be fitted to a heavy vehicle.
